# EUROPEAN PATENT SPECIFICATION

(11) **EP 2 443 714 B1**
(45) Date of publication and mention of the grant of the patent: **22.11.2017**
(21) Application number: 10731779.4
(22) Date of filing: 17.06.2010
(51) Int. Cl.: A47L 9/28, A47L 9/00, H02G 11/02, H01R 13/00, A47L 9/26, B65H 75/42

(54) **MOBILE ELECTRICAL APPLIANCE WITH CABLE REELER**
MOBILES ELEKTROGERÄT MIT KABELAUFROLLER
APPAREIL ÉLECTRIQUE MOBILE À ENROULEUR DE CÂBLE

(30) Priority: 19.06.2009 GB 0910679
(43) Date of publication of application: 25.04.2012
(60) Divisional application: 17195199.9
(73) Proprietor: NUMATIC INTERNATIONAL LIMITED, Camberley Surrey GU15 3SY (GB)
(72) Inventor: DUNCAN, Christopher Robert, Somerset TA20 3BH (GB)
(74) Representative: Brown, Fraser Gregory James
(86) International application number: PCT/GB2010/001189
(87) International publication number: WO 2010/146363

(56) References cited:
- EP-A2- 1 367 016
- WO-A1-2008/146988
- GB-A- 2 388 835
- US-A- 2 322 038
- US-A- 2 323 275
- US-A- 2 839 775
- US-A- 2 937 395
- US-A- 3 346 705
- US-A- 3 835 267
- US-A- 4 114 736
- US-A- 4 133 416
- US-A- 4 338 497
- US-A- 5 023 410

## Description

The present invention relates to the field of mains-powered electrical appliances in particular those which are mobile, such as vacuum cleaners, lawn mowers, floor scrubbers, power tools and the like. The appliances have a mains cable which may be reeled away to facilitate transport between duties and tidy storage.

The present invention concerns any mains-powered appliance equipped with a cable reeler, but finds particular application in the field of vacuum cleaners. Cable reelers are shown in upright cleaners in US 1,901,519 (March 1933) and in a drum and hose type cleaner in US 2,937,395 (May 1960).

US 5,775,922 discloses a cable reel devices which includes a slip ring arrangement which provides an electrical connection between a reel rotor shaft and electrical cable contact yokes.

US 5,255,768 discloses a cable winder for a vacuum cleaner in which the reel is disposed horizontally in an upper region of cleaner, and with a cable aperture formed in a sidewall of the cleaner. Electrical contacts in the form of continuous metal ribbons are mounted on an inner wall of a reel drum.

Cable reelers have a disadvantage in that if the cable fails (typically be a conductive core breaking or otherwise failing) the machine is difficult to repair in the field due to the complexity of typical reeler mechanisms and the electrical contacts required at the reel rotor/drum. Typically the machine must be returned to a specialist repairer before it can be placed back in service.

WO2008/146988 discloses a vacuum cleaner having a detachably mounted power cable reeler. US patent 2,839,775 discloses a barrel-form vacuum cleaner having a power cable reeler mounted axially at one end of the cleaner. US patent 2,322,038 discloses a similar arrangement. EP-A-1367016 discloses a cable reeler for a lawnmower which is accommodated in an upper region of the mower in an integrally formed spool holder. JP 2008-048922A discloses an upright vacuum cleaner in which a cable reeler is mounted on an upright handle portion. JP05309059A discloses a vacuum cleaner having a detachable cable reeler portion which may be placed apart from the cleaner, between the cleaner and a power socket in a building. Most of the foregoing devices have cable reelers which have a power cable having a distal end which carries an electrical plug for a remote power source and a proximal end which must, after unreeling, be plugged into a power inlet port of the machine. The cable may be easily replaced, but the cable must be disconnected for winding and unwinding.
JP05115396A discloses a vacuum cleaner having a separate base reeler portion, having an arrangement in which an electrical connection between the reeler and a base cable platform is made by electrical bushes.

US 5,023,410 discloses a vacuum cleaner according to the preamble of claim 1.

The present invention seeks to provide an electrical appliance which includes a cable reeler which permits unwinding of the power cable while maintaining an electrical power connection with the machine, but which may be easily repairable in the field in the event of a cable failure.
According to one aspect of the invention, there is provided a mobile mains-powered appliance according to claim 1.

An electrical connection between the second coupling portion and an electric motor drive of the appliance is typically made via a slip ring type connection associated with the reeler, or indeed any other suitable known connection between a rotating member and an electrical pick-up.
The electric supply coupling second portion is typically disposed on, or connected to, the cable reel that the coupling rotates with the spool during winding and unwinding.
The electric coupling second portion may be disposed on a flange portion of the reel, or a flange portion attached to and axially spaced apart from the reel.

The panel may be held in place by at least one retaining element which requires a separate tool to release for panel opening. Typically the retaining element is a bolt or screw and the tool may be a screwdriver or Allen key.

The access panel is preferably formed of clear material, or provided with a window, so that the coupling may be inspected through the closed panel. In this way the uninformed user can readily see that a failed cable may be replaced by decoupling.

The reel is typically enclosed in the appliance. The flange portion, on which the second coupling portion may be disposed, preferably forms an exterior wall portion of the housing, which portion rotates with the reel. This wall portion may be provided with a winding handle for manual rotation of the reel.

As in certain prior art devices, the cable extends from the housing via a fixed aperture in an exterior wall portion, which aperture opens into a reel circumferential space in the appliance. However, in another aspect of the invention a detachable fillet defines a perimeter portion of the aperture and extends to adjacent the rotatable flange which carries the second coupling portion. The arrangement is such that when the fillet is removed the cable may be placed in the aperture and the cable end carrying the first portion of the coupling may be led to the reel flange for coupling.

The fillet is preferably provided with at least one retaining element which requires a separate tool to release so as to permit removal of the fillet or to attach so as to fix the fillet in place. Typically the retaining element is a bolt or screw and the tool may be a screwdriver or Allen key.

The electrical coupling portions conveniently comprise a female socket and a male plug. Modern immobile appliances, such as PCs, printers and PC visual display units typically have detachable main power cables. Engagements of these types are suitable for forming couplings of the present invention, such as specified by IEC 60320. Other dedicated couplings however may be provided according to requirements.

The coupling is preferably recessed from an exterior wall of the appliance. A cable snag or clamp may be provided in the recess which prevents decoupling under reeling loading of the cable.

Following is a description by way of example only and with reference to the figures of the drawings of one mode for putting the present invention into effect.
Figure 1 is a front three quarter perspective view of a drum and hose type vacuum cleaner according to the present invention.
Figure 2 is a rear three quarter view of the vacuum cleaner.
Figure 3 is a close-up view of a top region of the cleaner around a cable aperture.
Figures 4, 5, 6, 7 and 8 illustrate the steps involved in replacing an electric power cable.
Figure 9 is a perspective view of the vacuum cleaner with power cable detached.
Figure 10 is a perspective view of a disassembled cable reeler in accordance with the invention.
Figure 11 is a perspective view of an assembled cable reeler.

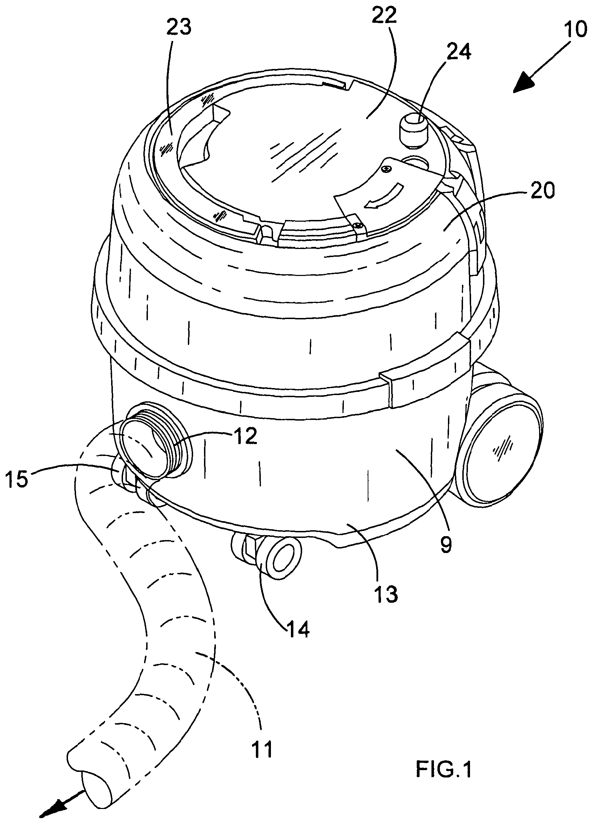

In Figure 1 a drum and hose type cleaner is shown generally as 10. The overall configuration and format corresponds to cleaners marketed under the Henry trade mark by Numatic International Ltd (applicant for the present application).

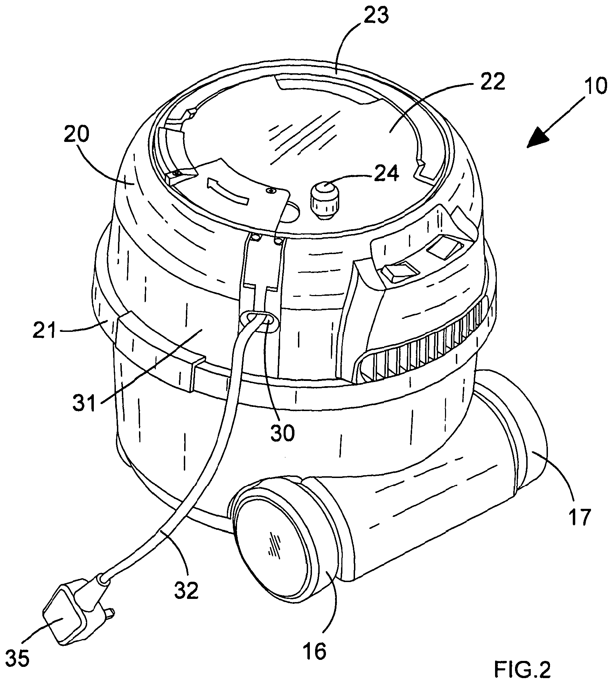

The cleaner comprises a hose portion 11 attached at a base end to a suction port 12 of a drum shaped body 9. The cleaner has a generally cylindrical base portion 13. A front underside portion of the base portion is supported by two castors 14,15. A rear end region of the base portion is provided with two spaced apart wheels 16,17 (shown best in figure 2). The wheels share a common horizontal axle (not visible). The wheel and castor arrangement permits the body 9 to be towed behind the hose 11 by a user.

An upper cylindrical lid portion 20 of the vacuum cleaner is disposed on an upper end region of the base portion. The lid portion is formed with an annular lower circumferential shoulder feature 21 which is releasably clamped onto the base portion. The lid may be unclamped to allow access into an interior dust collection cavity (not visible) of the base portion.

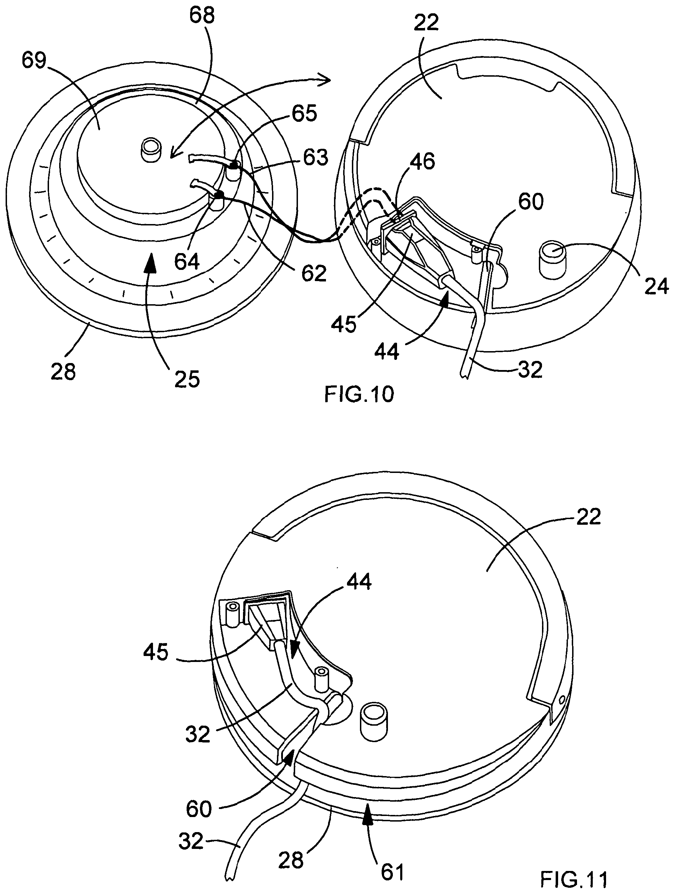

An upper surface of a top end region of the lid portion 20 is provided by a generally disc shaped reel flange piece 22. A folding carry handle 23 is recessed into the flange piece so that it lies flush. A reeling button 24 stands proud of the surface and is rotatably mounted. A reel (shown in figure 11) is mounted transversely in the lid for rotation about a vertical axis of rotation, which is generally co-axial with the cylindrical form of the body 9. The reel upper flange 22 and a corresponding lower flange 28 are disposed either side of a spooling drum 25 shown in figure 10. The drum is carried by an upstanding spigot axle (not shown). The reel is thus able to rotate and may be wound or unwound by a user manipulating the button 24.

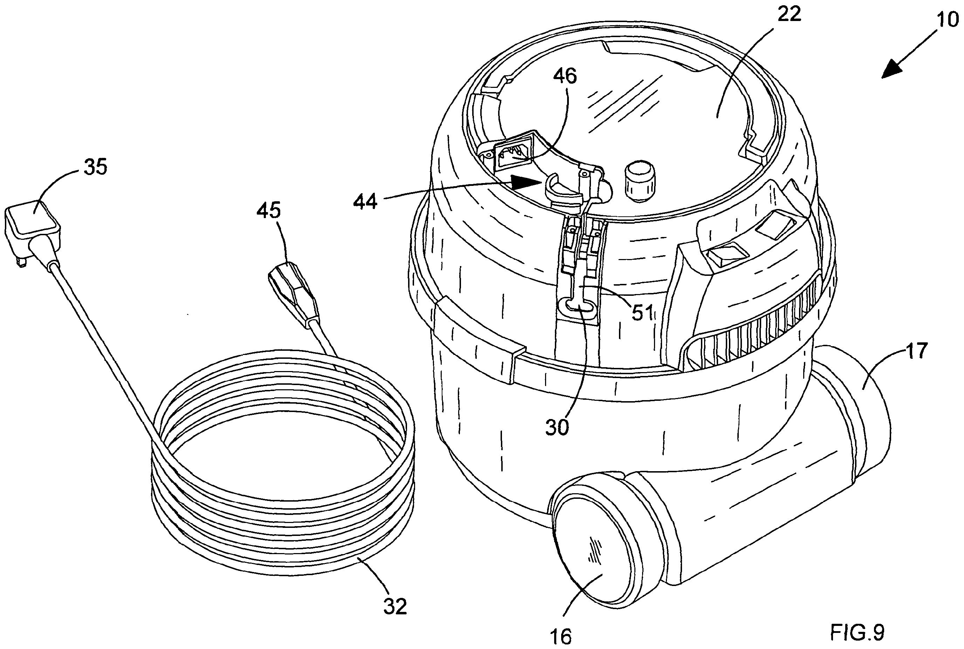

A cable aperture 30 is formed in a sidewall 31 of the lid portion. The aperture is in the form of a horizontally elongate slot having curved ends. An electric power cable 32 feeds into the lid portion and runs onto the reel spooling drum inside the lid portion. Thus the cable may be spooled by winding the button 24 in the appropriate direction. The cable may be unspooled by the user tugging on the cable which draws the cable out as the reel turns in response. Alternatively the cable may unspool during use as the cleaner is wheeled over a floor surface. A distal end of the cable visible in figure 9 is provided with a three-pin UK mains plug 35 which may be plugged into a wall socket (not shown)

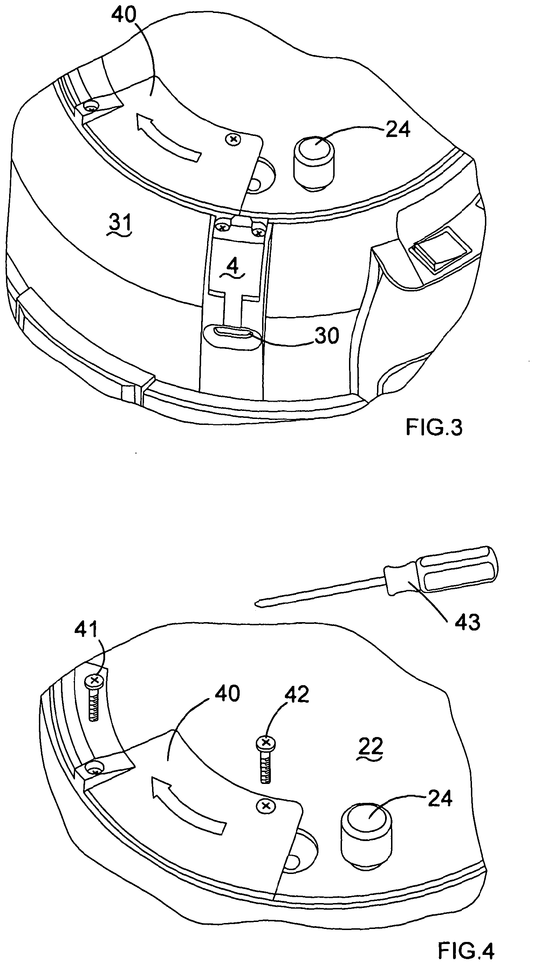

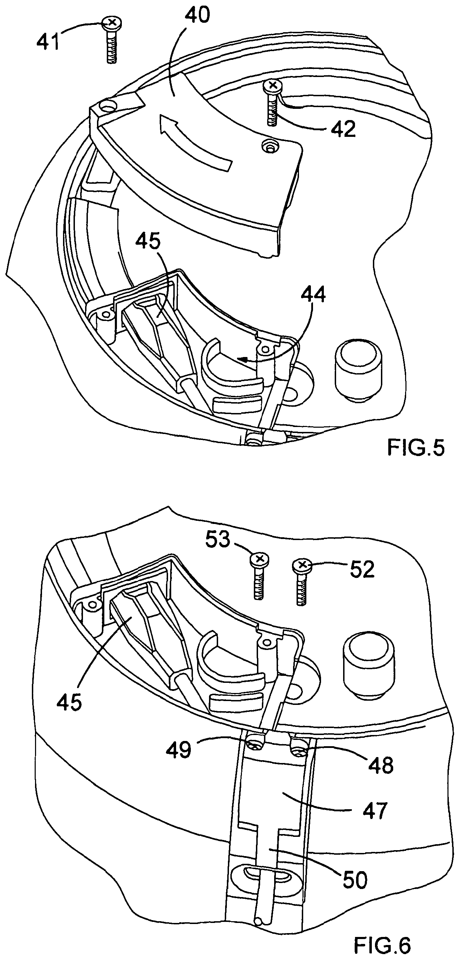

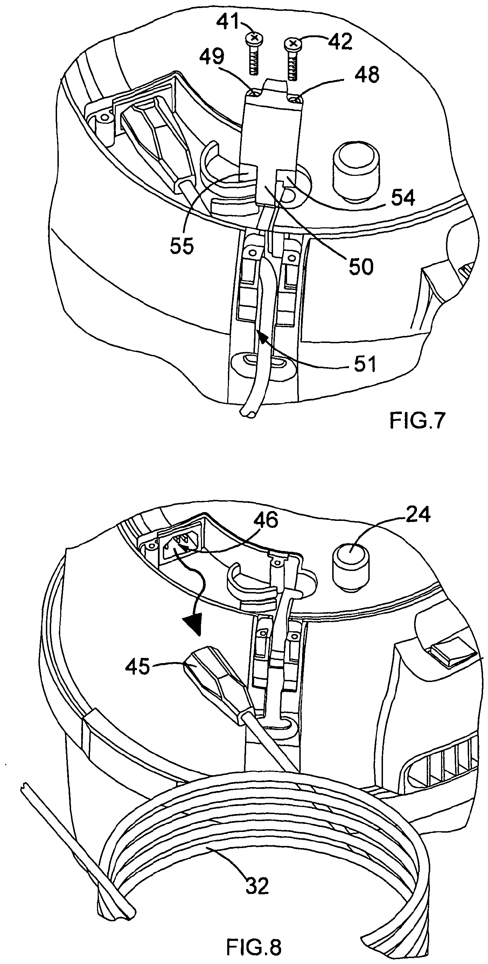

The present embodiment of the invention involves the provision of a plug and socket electrical connection in the reel assembly. This becomes visible in the series of figures 3 to 8. In figure 1 an access panel 40 is a generally arcuate shaped flat member. The panel is formed of transparent plastics material. The panel is formed with mounting holes in which are disposed threaded mounting bolts 41,42 shown in figure 4. The mounting bolts are self-tapping in the flange piece 22. The bolts may be removed by a screwdriver 43. This allows the panel to be lifted as shown in figure 5. Under the panel there is formed a recessed electrical connection box 44. The box is provided with an International Electrotechnical Commission connection of a type specified in IEC 60320. This standard covers several connector configurations, and the particular connectors selected will be dictated by local standards, regulations and preferences. A machine end of the electrical cable 32 is provided with an IEC socket connector 45. The socket connector is seated in a plug connector 46 visible in figure 8. The cable extending from the engaged connector is threaded through a cut-out radial slot 60 (shown in figures 10 and 11) in the box floor. The slot communicates with the annular cable reel chamber 61 defined around the spool drum 25 between upper and lower flanges 22 and 28 inside the lid.

A sidewall fillet piece 47 is an elongate member formed at an upper region thereof with two axially oriented side-by-side collars 48,49. A lower region of the fillet is provided with a depending tongue 50 which sits in a slot 51 (visible in figure 7). The slot extends down to an upper edge portion of the cable aperture 30. Thus the lower end of the tongue forms a upper portion of the aperture perimeter. On either side of the tongue are two downwardly facing wedge pieces 54, 55. The fillet is retained in the side wall by two self-tapping bolts 52, 53 which are seated in the collars 48, 49. The wedge pieces sit in corresponding recesses in the lid sidewall, so that the fillet is securely retained at upper and lower ends thereof.

The bolts may be unscrewed and the fillet vertically slid out of position. This allows the cable to be lifted out of the aperture via the slot 51, as shown in figures 7 and 8. The cable may be completely removed from the vacuum cleaner by unplugging of the IEC connectors. The cable may then be replaced as required and the fillet and panel replaced.

With the cable connector attached to the machine, the connector 45 is engaged and the trailing cable placed in the flange slot 60. The cable is laid into the sidewall aperture 30 and the fillet slid into place and retained by the fixing bolts. When the button 24 is used to wind the reel the connection box and flange 22 rotate with the reel, drawing the cable in through the fixed aperture. The flange slot 60 acts to snag the cable and draw it into the spooling chamber 60 as the reel rotates. The button is rotated clockwise to load the reel and then allowed to unwind during use as the machine travels over a floor surface.

The electrical connection box makes an electrical connection with a drive motor via a conventional slip-ring arrangement (not shown) in the reeler mechanism. As shown in figure 10, electrical wires 62,63 lead from an inside region of the connector socket 46 and to terminals 64,65 disposed on an annular collar 69 at a top region of the drum spool 25. The terminals connect with contact bushes 66,67. When assembled the upper flange piece 22 located co-axially with the drum and lower flange and is fixed to the upper end face 68 of the drum spool, thereby to form the complete reel shown in figure 11. of the invention bypass the need to have access to these features for cable replacement.

## Claims

1. A mobile mains-powered appliance (10), the appliance including a cable reeler (22,25,28) for a power supply cable (32), the reeler comprising a rotatable reel (25) housed in the appliance onto which the cable can be wound, whereby the cable may be extended or retracted from the appliance by unwinding or winding of the cable from or onto the reel, wherein the cable is rendered detachable from the appliance by the provision of a detachable electric supply coupling comprising first and second coupling portions (45,46), the first coupling portion (45) being attached to a machine end region of the cable, and the second coupling portion (46) being attached to the appliance, the coupling portions being adapted to be releasably engageable with one another so as to make or detach an electrical connection between the cable and the appliance, **characterised in that** the second coupling portion (46) is disposed on or in an external wall portion (22) of the appliance under an openable access panel (40) provided in the wall portion so that the coupling is accessible to permit manual engagement or disengagement of the coupling portions when the access panel is opened, and said external wall portion is an outside-facing cable reel flange portion (22) or an outside-facing flange portion attached to and axially spaced apart from the reel, so that the outside facing flange portion (22) and the second coupling portion (46) rotate with the reel during winding and unwinding, wherein a cable path is provided which communicates between a region of the electric supply coupling for accommodating the first coupling portion to a circumferential reel spooling space (61) for the cable via an open-ended radially extending slot (60) which passes through the flange portion.

2. An appliance as claimed in claim 1 wherein an electrical connection between the second coupling portion and an electric motor drive of the appliance is made via a slip ring type connection associated with the reeler.

3. An appliance as claimed in claim 1 or claim 2 wherein the access panel is held in place by at least one retaining element (41,42) which requires a separate tool to release for panel opening.

4. An appliance as claimed in any of the preceding claims wherein the access panel is formed of clear material, or provided with a window, so that the coupling may be inspected through the closed panel.

5. An appliance as claimed in any of the preceding claims wherein the reel is enclosed in the appliance and the flange portion on or in which the second coupling portion is disposed forms an exterior wall portion (22) of the housing, which portion rotates with the reel.

6. An appliance as claimed in claim 5 wherein the cable extends from the housing via a fixed aperture (30) in an exterior wall portion (31), which aperture opens into a circumferential spooling space in the appliance.

7. An appliance as claimed in claim 6 wherein a detachable fillet (47) defines a perimeter portion of the aperture and extends to adjacent the rotatable flange portion which carries the second coupling portion, the arrangement being such that when the fillet is removed the cable may be placed in the aperture and the cable end carrying the first portion of the coupling may be led to the reel flange portion(22) for coupling.

8. An appliance as claimed in claim 7 wherein the fillet is provided with at least one retaining element (52,53) which requires a separate tool to release so as to permit removal of the fillet or to attach so as to fix the fillet in place.

9. An appliance as claimed in any of the preceding claims wherein the coupling is recessed (44) from the external wall of the appliance.

10. An appliance as claimed in claim 9 wherein a cable snag or clamp is provided in the recess which prevents decoupling under reeling loading of the cable.

11. An appliance as claimed in any of the preceding claims which is a vacuum cleaner (10) and in which the mains supplies electrical power for an electric suction fan.

12. An appliance as claimed in any of the preceding claims wherein the electrical coupling portions comprise a female socket and a male plug, such as specified by IEC 60320.

13. An appliance according to any of the preceding claims wherein the appliance is a canister type vacuum cleaner (10) having a body portion (9) and a wand portion which is connected to the body portion by a flexible hose (11), the cable reeler being provided in an upper end region of the body portion, and arranged so as to rotate about a generally vertical axis.

## Patentansprüche

1. Eine mobile netzbetriebene Vorrichtung (10), die Vorrichtung umfassend einen Kabelaufroller (22, 25, 28) für ein Leistungsversorgungskabel (32), wobei der Aufroller eine drehbare Spule (25), die in der Vorrichtung untergebracht ist und auf welche das Kabel gewickelt werden kann, umfasst, wobei das Kabel aus der Vorrichtung durch Abwickeln oder Wickeln des Kabels von oder auf die Spule ausgefahren oder eingezogen werden kann, wobei das Kabel von der Vorrichtung abnehmbar ausgeführt ist durch Bereitstellung einer abnehmbaren elektrischen Versorgungskupplung, die erste und zweite Kupplungsabschnitte (45, 46) umfasst, wobei der erste Kupplungsabschnitt (45) an einem Maschinenendbereich des Kabels angebracht ist und der zweite Kupplungsabschnitt (46) an der Vorrichtung angebracht ist, wobei die Kupplungsabschnitte eingerichtet sind, um lösbar verbindbar miteinander zu sein, um eine elektrische Verbindung zwischen dem Kabel und der Vorrichtung herzustellen oder zu trennen, **dadurch gekennzeichnet, dass** der zweite Kupplungsabschnitt (46) auf oder in einem äußeren Wandabschnitt (22) der Vorrichtung unter einem öffenbaren Zugangspaneel (40), das in dem Wandabschnitt bereitgestellt ist, angeordnet ist, sodass die Kupplung zugänglich ist, um eine manuelle Verbindung oder Trennung der Kupplungsabschnitte zu ermöglichen, wenn das Zugangspaneel geöffnet ist, und besagter äußerer Wandabschnitt ein nach außen weisender Kabelspulenflanschabschnitt (22) oder ein nach außen weißender Flanschabschnitt, der an der Spule angebracht und axial von dieser beabstandet ist, sodass der nach außenweisende Flanschabschnitt (22) und der zweite Kupplungsabschnitt (46) mit der Spule während des Wickelns und Abwickelns drehen, wobei ein Kabelpfad bereitgestellt ist, welcher einen Bereich der elektrischen Versorgungskupplung zum Aufnehmen des ersten Kupplungsabschnitts mit einem umlaufenden Spulenaufwickelraum (61) für das Kabel über einen offenendigen, sich radial erstreckenden Schacht (60), welcher durch den Flanschabschnitt läuft, verbindet.

2. Eine Vorrichtung wie in Anspruch 1 beansprucht, wobei eine elektrische Verbindung zwischen dem zweiten Kupplungsabschnitt und einem elektrischen Motorantrieb der Vorrichtung über eine Verbindung des Schleifringtyps, die mit dem Aufroller verbunden ist, hergestellt wird.

3. Eine Vorrichtung wie in Anspruch 1 oder Anspruch 2 beansprucht, wobei das Zugangspaneel durch wenigstens ein Rückhalteelement (41, 42) an der Stelle gehalten wird, welches ein separates Werkzeug zum Lösen für ein Paneelöffnen benötigt.

4. Eine Vorrichtung wie in einem der vorherigen Ansprüche beansprucht, wobei das Zugangspaneel aus einem klaren Werkstoff ausgebildet ist oder mit einem Fenster bereitgestellt ist, sodass die Kupplung durch das geschlossene Paneel hindurch inspiziert werden kann.

5. Eine Vorrichtung wie in einem der vorherigen Ansprüche beansprucht, wobei die Spule in der Vorrichtung eingeschlossen ist und der Flanschabschnitt, auf oder in welchem der zweite Kupplungsabschnitt angeordnet ist, einen äußeren Wandabschnitt (22) des Gehäuses ausbildet, welcher Abschnitt mit der Walze rotiert.

6. Eine Vorrichtung wie in Anspruch 5 beansprucht, wobei sich das Kabel von dem Gehäuse über eine fixierte Öffnung (30) in dem äußeren Wandabschnitt (31) erstreckt, welche Öffnung sich in einen umlaufenden Aufwickelraum in der Vorrichtung öffnet.

7. Eine Vorrichtung wie in Anspruch 6 beansprucht, wobei eine abnehmbare Leiste (47) einen Umfangabschnitt der Öffnung definiert und sich angrenzend an den drehbaren Flanschabschnitt erstreckt, welcher den zweiten Kupplungsabschnitt trägt, wobei die Anordnung derart ist, dass wenn die Leiste entfernt wird, das Kabel in der Öffnung platziert werden kann und das Kabelende, das den ersten Abschnitt der Kupplung trägt, zu dem Spulenflanschabschnitt (22) zum Koppeln geführt werden kann.

8. Eine Vorrichtung wie in Anspruch 7 beansprucht, wobei die Leiste mit wenigstens einem Rückhalteelement (52, 53) versehen ist, welches ein separates Werkzeug zum Lösen benötigt, um ein Entfernen der Leiste zu ermöglichen, oder zum Anbringen, um die Lasche an der Stelle zu fixieren.

9. Eine Vorrichtung wie in einem der vorherigen Ansprüche beansprucht, wobei die Kupplung von der äußeren Wand der Vorrichtung ausgebuchtet ist (44).

10. Eine Vorrichtung wie in Anspruch 9 beansprucht, wobei ein Kabelhaken oder -klammer in der Einbuchtung bereitgestellt ist, welche ein Auskuppeln unter Wickelbelastung des Kabels verhindert.

11. Eine Vorrichtung wie in einem der vorherigen Ansprüche beansprucht, welche ein Staubsauger (10) ist und in welcher das Netz elektrische Leistung für ein elektrisches Sauggebläse liefert.

12. Eine Vorrichtung wie in einem der vorherigen Ansprüche beansprucht, wobei die elektrischen Kupplungsabschnitte eine weibliche Buchse und einen männlichen Stecker umfassen, so wie durch IEC 60320 spezifiziert.

13. Eine Vorrichtung nach einem der vorherigen Ansprüche, wobei die Vorrichtung ein Staubsauger (10) des Kanistertyps ist, der einen Körperabschnitt (9) und einen Wandabschnitt, welcher mit dem Körperabschnitt durch einen flexiblen Schlauch (11) verbunden ist, aufweist, wobei der Kabelaufroller in einem oberen Bereich des Körperabschnitts bereitgestellt ist und angeordnet ist, um um eine im wesentlichen vertikale Achse zu rotieren.

## Revendications

1. Appareil mobile fonctionnant sur secteur (10), l'appareil comprenant un enrouleur de câble (22, 25, 28) destiné à un câble d'alimentation électrique (32), l'enrouleur comprenant une bobine rotative (25) contenue dans l'appareil et sur laquelle le câble peut être enroulé, moyennant quoi le câble peut être étendu ou rétracté à partir de l'appareil en enroulant ou en déroulant le câble sur ou depuis la bobine, dans lequel le câble devient détachable de l'appareil en prévoyant un raccordement d'alimentation électrique détachable comprenant une première et une seconde parties de couplage (45, 46), la première partie de couplage (45) étant reliée à une zone d'extrémité de machine du câble, et la seconde partie de couplage (46) étant reliée à l'appareil, les parties de couplage étant adaptées pour pouvoir être mises en prise de manière amovible l'une avec l'autre de façon à former ou à détacher une liaison électrique entre le câble et l'appareil,
**caractérisé en ce que** la seconde partie de couplage (46) est disposée sur ou dans une partie de paroi externe (22) de l'appareil sous un panneau d'accès ouvrable (40) prévu dans la partie de paroi de sorte que le couplage soit accessible afin de permettre l'engagement ou le désengagement manuel des parties de couplage lorsque le panneau d'accès est ouvert, et ladite partie de paroi externe est une partie de rebord d'enrouleur de câble tournée vers l'extérieur (22) ou une partie de rebord tournée vers l'extérieur et reliée à et axialement espacée de l'enrouleur, de sorte que la partie de rebord tournée vers l'extérieur (22) et la seconde partie de couplage (46) tournent avec l'enrouleur pendant l'enroulement ou le déroulement, dans lequel un chemin de câble est prévu et communique entre une zone du couplage d'alimentation électrique destiné à contenir la première partie de couplage et un espace d'enroulement de bobine circonférentiel (61) destiné au câble par le biais d'une fente à extrémité ouverte s'étendant radialement (60) qui traverse la partie de rebord.

2. Appareil selon la revendication 1, dans lequel une liaison électrique entre la seconde partie de couplage et un moteur d'entraînement électrique de l'appareil est établie à l'aide d'une connexion de type bague collectrice associée à l'enrouleur.

3. Appareil selon la revendication 1 ou la revendication 2, dans lequel le panneau d'accès est maintenu en place par au moins un élément de retenue (41, 42) qui nécessite qu'un outil distinct soit libéré pour permettre l'ouverture du panneau.

4. Appareil selon l'une quelconque des revendications précédentes, dans lequel le panneau d'accès est formé d'un matériau transparent, ou est muni d'une fenêtre, de sorte que le couplage puisse être inspecté à travers le panneau fermé.

5. Appareil selon l'une quelconque des revendications précédentes, dans lequel l'enrouleur est contenu dans l'appareil et la partie de rebord sur ou dans laquelle la seconde partie de couplage est disposée forme une partie de paroi externe (22) du boîtier, ladite partie tournant avec l'enrouleur.

6. Appareil selon la revendication 5, dans lequel le câble s'étend depuis le boîtier par le biais d'une ouverture fixe (30) dans une partie de paroi externe (31), ladite ouverture s'ouvrant dans un espace d'enroulement circonférentiel dans l'appareil.

7. Appareil selon la revendication 6, dans lequel un filet détachable (47) définit une partie périmétrique de l'ouverture et s'étend jusqu'à proximité de la partie de rebord rotative qui supporte la seconde partie de couplage, l'agencement étant tel que, lorsque le filet est retiré, le câble peut être déplacé dans l'ouverture et l'extrémité de câble supportant la première partie du couplage peut être guidée jusqu'à la partie de rebord de l'enrouleur (22) pour le couplage.

8. Appareil selon la revendication 7, dans lequel le filet est muni d'au moins un élément de retenue (52, 53) qui nécessite qu'un outil distinct soit libéré pour permettre le retrait du filet, ou soit relié pour fixer le filet en place.

9. Appareil selon l'une quelconque des revendications précédentes, dans lequel le couplage est en retrait (44) de la paroi externe de l'appareil.

10. Appareil selon la revendication 9, dans lequel une aspérité de câble ou un serre-câble est prévu dans le renfoncement et empêche tout détachement sous la charge d'enroulement du câble.

11. Appareil selon l'une quelconque des revendications précédentes, qui est un aspirateur (10) et dans lequel le secteur fournit de l'énergie électrique destinée à un ventilateur d'aspiration électrique.

12. Appareil selon l'une quelconque des revendications précédentes, dans lequel les parties de couplage électrique comprennent une prise femelle et une prise mâle, comme spécifié par l'IEC 60320.

13. Appareil selon l'une quelconque des revendications précédentes, dans lequel l'appareil est un aspirateur de type traîneau (10) ayant une partie de corps (9) et une partie de tube-rallonge qui est reliée à la partie de corps par un tuyau flexible (11), l'enrouleur de câble étant prévu dans une zone d'extrémité supérieure de la partie de corps, et disposé de façon à tourner autour d'un axe généralement vertical.
